# EUROPÄISCHE PATENTSCHRIFT

(11) **EP 1 943 063 B1**
(45) Veröffentlichungstag und Bekanntmachung des Hinweises auf die Patenterteilung: **03.11.2010**
(21) Anmeldenummer: 06761739.9
(22) Anmeldetag: 30.06.2006
(51) Int. Cl.: B25J 9/02, B25J 9/04, B65G 67/08

(54) **VORRICHTUNG ZUM BE- UND/ODER ENTLADEN VON STÜCKGÜTERN**
DEVICE FOR CHARGING OR DISCHARGING GOODS
DISPOSITIF POUR CHARGER ET DECHARGER DES MARCHANDISES

(30) Priorität: 23.09.2005 DE 102005047644
(43) Veröffentlichungstag der Anmeldung: 16.07.2008
(60) Teilanmeldung: 09177234.3
(73) Patentinhaber: Deutsche Post AG, 53175 Bonn (DE)
(72) Erfinder: ECHELMEYER, Wolfgang, 27711 Osterholz-Scharmbeck (DE); FRANCK, Hermann, 27721 Ritterhude (DE); WELLBROCK, Eckhard, 28213 Bremen (DE); ROSENHÄGER, Jörg, 33739 Bielefeld (DE)
(74) Vertreter: Jostarndt, Hans-Dieter
(86) Internationale Anmeldenummer: PCT/DE2006/001136
(87) Internationale Veröffentlichungsnummer: WO 2007/033629

(56) Entgegenhaltungen:
- EP-A1- 0 553 717
- JP-A- 3 104 591
- JP-A- 56 045 392
- JP-A- 61 023 006
- NL-C1- 1 021 658
- US-A- 4 706 204
- US-A- 5 015 145

## Beschreibung

Die vorliegende Erfindung betrifft einen Roboter, umfassend eine horizontale Linearachse mit einem verfahrbaren Schlitten und einen Gelenkarm, dessen eines Ende über ein Drehgelenk mit einem der beiden Enden des Schlittens in dessen Verfahrrichtung verbunden ist, sowie eine Vorrichtung zum Be- und/oder Entladen von Stückgütern für von wenigstens einer Seite horizontal zugängliche Transportfahrzeuge oder -behälter, mit einem in das Transportfahrzeug bzw. den Transportbehälter hinein verfahr- oder teleskopierbaren Förderer und mit einem in das Transportfahrzeug oder den Transportbehälter hinein bewegbaren Roboter und eine Vorrichtung zum Ein- und/oder Auslagern von Stückgütern für Hochregale, mit einem an bzw. in das Hochregal heranfahr- oder teleskopierbaren bzw. hineinfahr- oder teleskopierbaren Förder und mit einem an bzw. in das Hochregal bewegbaren Roboter. Eine Linearachse kann beispielsweise ein angetriebenes Linearführungssystem sein.

Mit Stückgütern ist alles gemeint, was sich in Form von Kolli transportieren läßt, also weder flüssig- noch gasförmig ist. Flüssigkeiten und Gase in Behältern (z.B. Fässern oder Gasflaschen) zählen jedoch zum Stückgut. Stückgüter können quaderähnliche, rotationskörperähnliche und kompliziertere Formen aufweisen und auch Container, zum Beispiel auf einem Containerschiff umfassen.

Transportfahrzeuge können zum Beispiel Lastkraftwagen, Güterwagen, Schiffe, Flugzeuge etc. sein. Zu den Transportbehältern gehören zum Beispiel Container. Letztere sind häufig langgestreckte, kastenförmige Transport- und Lagerräume für Stückgut.

In den Distributionszentren von Logistikdienstleistem wird das eintreffende Stückgut mit Hilfe von Vorrichtungen zum Entladen von Stückgütern der eingangs genannten Art entladen und darüber hinaus weitgehend automatisch verteilt. Zu diesem Zweck werden häufig Förderer mit Förderbändern eingesetzt, die nach und nach In das Innere eines Containers hinein verfahren werden, und wird das im Container gelagerte Stückgut mittels eines Roboters auf das Förderband gelegt, woraufhin das Stückgut vom Förderband abtransportiert wird. Der Roboter wird zusammen mit dem Förderer oder zugleich mit diesem in den Container hineinbewegt. Derartige Roboter besitzen ein optisches Erkennungssystem zur Identifizierung von einzelnen Stückgütern und einen Effektor zum Beispiel in Form einer Greifvorrichtung, die das Stückgut nacheinander erfaßt und auf das Förderband legt. Diese Art des Entladens ist verhältnismäßig umständlich und damit zeitaufwendig, da die dafür verwendeten Roboter üblicherweise seitlich von oder vor dem Förderband am Ende desselben im Container positioniert sind und sich somit nach dem Erfassen des Stückguts In Richtung der stromabwärtigen Seite des Förderbandes drehen müssen und erst danach das Stückgut auf dem Förderband ablegen können.

Das vorgenannte Problem besteht auch bei Vorrichtungen zum Ein- und Auslagern von Stückgütern für ein Hochregal und ganz allgemein bei Vorrichtungen zum Überführen bzw. Umschlagen von Stückgütern.

Die US-Patentschrift US 5,015,145 beschreibt dazu beispielsweise eine Vorrichtung zum Beladen von Stückgütern für von wenigstens einer Seite horizontal zugängliche Transportfahrzeuge oder Transportbehälter. Die Vorrichtung ist in den Laderaum des Transportfahrzeugs bzw. in den Transportbehälter verfahrbar und führt die Beladung anhand einer zuvor bestimmten optimierten Beladungskonfiguration durch. Die Vorrichtung umfasst dazu ein Förderband zum Anfördern von Stückgütern aus einem Lager und einen Roboter, der einen Teleskoparm aufweist. Der Teleskoparm ist auf einer horizontal verfahrbaren Schiene montiert, welche wiederum vertikal verfahrbar ist.

Der Erfindung liegt somit die Aufgabe zugrunde, ein schnelleres Überführen bzw. Umschlagen, insbesondere Be- und/oder Entladen und Ein- und/oder Auslagern von Stückgütern, als dies bisher möglich war, zu ermöglichen.

Diese Aufgabe wird durch eine Vorrichtung gemäß Anspruch 1 gelöst. Vorteilhafte Ausführungen dieser Vorrichtung ergeben sich aus den Unteransprüchen 2-13.

Erfindungsgemäß wird diese Aufgabe durch eine Vorrichtung mit einem_Roboter gemäß der eingangs genannten Art dadurch gelöst, daß der Gelenkarm in einer Ebene, die unter dem Winkel α im Bereich von 45° bis 90° zur Horizontalen verläuft, drehbar ist und mindestens zwei Gelenkarmteile, die in besagter Ebene in Bezug aufeinander drehbar sind, und einen Effektor umfaßt, der an dem frei beweglichen Ende des äußeren Gelenkarmteils vorgesehen ist. Der Effektor kann zum Beispiel ein Greifer, wie zum Beispiel Klemm- oder Sauggreifer, aber auch ein Finger oder eine Art Hand oder Gabel zum Anheben eines Stückguts sein.

Vorzugsweise ist bei der Vorrichtung zum Be- und/oder Entladen von Stückgütern der eingangs genannten Art der Roboter in einer erhöhten Position über dem Förderer angeordnet.

Bei dem Roboter gemäß der erfindungsgemäßen Vorrichtung kann vorgesehen sein, daß die Ebene unter einem Winkel α im Bereich von 45° bis 90° zur Verfahrrichtung des Schlittens verläuft.

In einer besonderen Ausführungsform der erfindungsgemäßen Vorrichtung ist die Basis des Roboters ein Schlitten einer Linearachse.

Weiterhin kann vorgesehen sein, daß die Seite der Basis unter einem Winkel α im Bereich von 45° bis 90° zur Horizontalen verläuft.

Insbesondere kann dabei vorgesehen sein, daß die Seite der Basis unter einem Winkel α im Bereich von 45° bis 90° zur Verfahrrichtung der Basis verläuft.

Vorteilhafterweise liegt der Winkel α im Bereich von 60° bis 90°.

Insbesondere kann vorgesehen sein, daß der Winkel α 90° beträgt.

Vorteilhafterweise ist die Linearachse in Mehrspurbauweise gestaltet.

Zweckmäßigerweise umfaßt die Linearachse eine Zahnradantriebseinrichtung.

Bei den Vorrichtungen zum Be- und/oder Entladen sowie zum Ein- und/oder Auslagern von Stückgütern umfaßt der Förderer günstigerweise ein Förderband.

Günstigerweise ist eine das Förderband überspannende Brücke vorgesehen und ist der Roboter an der Brücke montiert. Anstelle der Brücke kann selbstverständlich auch ein Tragarm vorgesehen sein oder der Roboter stattdessen an einer Decke oder an der Oberseite einer Gebäudeöffnung montiert sein.

Vorteilhafterweise ist die Brücke in der Höhe verfahrbar. Dies liefert eine siebte Achse, damit der mindestens zweiteilige Gelenkarm bestimmte singuläre Positionen durch eine Achskonfiguration anfahren kann, die sonst bedingt durch bestimmte geometrische oder mathematische Randbedingungen nicht erreichbar sind.

Zweckmäßigerweise ist der Befestigungspunkt des Gelenkarmteils horizontal quer zum Förderband an der Brücke verfahrbar.

Günstigerweise ist der Roboter an der Unterseite oder Oberseite des Mittelteils der Brücke montiert.

Gemäß einer weiteren besonderen Ausführungsform der Erfindung kann vorgesehen sein, daß die Brücke unabhängig vom Förderband oder vom vorderen Ende des Förderbandes in das Transportfahrzeug bzw. in den Transportbehälter hinein verfahrbar ist.

Alternativ kann auch vorgesehen sein, daß die Brücke auf einem Wagen montiert ist, der zusammen mit dem Förderband oder dem vorderen Ende des Förderbandes in das Transportfahrzeug oder den Transportbehälter hinein verfahrbar ist. Beispielsweise kann der Wagen mit dem äußeren Ende des Förderbandes gekoppelt sein.

Außerdem ist denkbar, daß der Roboter einen Gelenkarm aufweist, der in einer horizontalen Ebene drehbar ist und mindestens zwei Gelenkannteile umfaßt, die in besagter horizontaler Ebene in Bezug aufeinander drehbar sind.

Der Erfindung liegt die überraschende Erkenntnis zugrunde, daß durch die Anordnung des Roboters in einer erhöhten Position über dem Förderband selbiger das Stückgut zum Beispiel mit einem Greifer erfassen und unmittelbar auf ein Förderband legen kann, durch das es abtransportiert werden kann. Zusätzliche Schwenk- und Drehbewegungen des Roboters sind nicht erforderlich. Dadurch lässt sich zum Beispiel das Be- und/oder Entladen und Ein- und/oder Auslagern von Stückgütern schneller durchfahren.

Zudem wird durch die erfindungsgemäße Vorrichtung auf besonders einfache Weise ein schnelles Be- und/oder Entladen bzw. Ein- und/oder Auslagern von Stückgütern erleichtert, da damit zum Beispiel bei Containern der gesamte rechteckige Querschnitt abgedeckt werden kann.

Die Roboter verfügen über insgesamt mindestens sechs verfahrbare Achsen, damit Stückgut in einem Container in jeder möglichen Lage ergriffen werden kann.

Weitere Merkmale und Vorteile der Ereindung ergeben sich aus den Ansprüchen und der nachstehenden Beschreibung, in der mehrere Ausnihrungsbeispiele anhand der schematischen Zeichnungen im einzelnen erläutert sind. Dabei zeigt:
- Figur 1: eine perspektivische Darstellung einer Vorrichtung zum Entladen von Stückgütern gemäß einer besonderen Ausführungsform der Erfindung im Augenblick des Aufgreifens eines Pakets im Inneren eines nicht dar- gestellten Containers;
- Figur 2: eine entsprechende Darstellung im Augenblick des Aufsetzens des Pa- kets auf ein Förderband;
- Figur 3: eine entsprechende Darstellung der Situation nach der Freigabe des Pakets auf dem Förderband;
- Figur 4: eine perspektivische Darstellung einer Vorrichtung zum Entladen ge- mäß einer weiteren besonderen Ausführungsform der Erfindung; und
- Figur 5: eine perspektivische Darstellung einer Vorrichtung zum Entladen ge- mäß einer weiteren besonderen Ausführungsform der Erfindung.

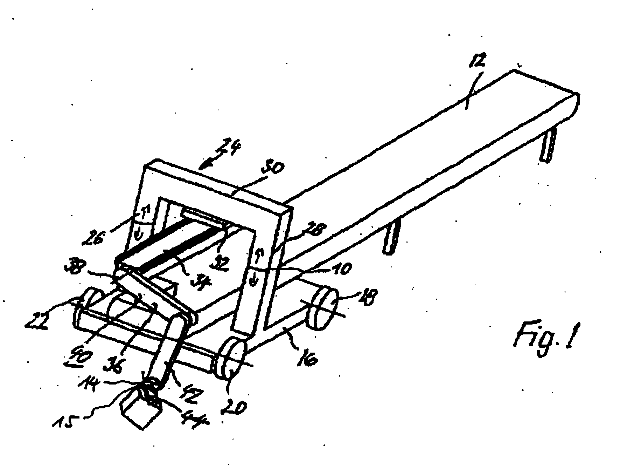

Figur 1 zeigt eine Vorrichtung zum Entladen gemäß einer besonderen Ausführungsform der Erfindung in einer Anordnung, wie sie in einem nicht dargestellten, sich in allen Figuren hierin links unten zu denkenden Container eingeführt wird. Die Vorrichtung zum Entladen umfaßt ein Förderband 12, das mit Hilfe einer nicht dargestellten Teleskopiervorrichtung in Längsrichtung in einen kastenförmigen, lang gestreckten Container von dessen Stirnseite her einfahrbar ist. Der Förderer kann somit entsprechend dem fortschreitenden Entladevorgang seine Länge stufenlos verändern. In Zuordnung zu dem vorderen Ende des Förderers 10 ist ein Wagen 16 vorgesehen, der mit Hilfe von Rollen 18, 20, 22 in Längsrichtung des Containerinnenraums verfahrbar ist. Der Wagen 16 kann mit dem vorderen Ende des Förderers 10 verbunden sein oder kann in seiner Bewegung in anderer Weise mit dem vorrückenden Förderer 10 synchronisiert sein.

Auf dem Wagen 16 befindet sich eine Brücke, die den Förderer 12 in der Form eines umgekehrten U überbrückt. Die Brücke ist mit 24 bezeichnet worden und umfasst senkrechte Schenkel 26, 28, deren oberen Enden durch einen Querträger 30 verbunden sind. Die Brücke 24 kann mit der senkrechten Verfahrvorrichtung 10 die Höhe verändern.

Unter dem Querträger 30 ist eine Führung 32 befestigt, an deren Unterseite ein Schlitten 34 längs verschiebbar geführt ist. Dieser Schlitten 34 trägt an seinem vorderen, in Figur 1 dem Betrachter zugewandten Ende einen zweiteiligen Gelenkarm 36, der um eine parallel zum Förderband 12 verlaufenden Achse 38, das heißt in einer Ebene unter einem Winkel α (nicht eingezeichnet) von 90° zur Horizontalen und zur Verfahrrichtung des Schlittens 34 drehbar ist. Der Gelenkarm 36 umfaßt ein erstes Gelenkarmteil 40 und ein zweites Gelenkarmteil 42, das im Bereich des äußeren Endes des ersten Gelenkarmteils 40 um eine nicht dargestellte, parallel zum Förderband 12 verlaufende Achse drehbar ist. Am Ende des zweiten Gelenkarmteils 42 befinden sich hintereinander die drehbare Achse 14 und die nicht dargestellte drehbare Achse 15, wobei die Achse 14 parallel zur Drehachse des zweiten Gelenkarmteils 42 und die Achse 15 im rechten Winkel dazu verläuft. Am äußeren Ende der drehbaren Achse 15 befindet sich ein Greifer 44, der es gestattet Stückgut zu ergreifen, wie in Figur 1 erkennbar ist.

Der Greifer 44 kann somit die gesamte Querschnittsfläche des nicht dargestellten Containers bestreichen und durch Bewegung des Schlittens 34 kann jede Position in Längsrichtung des Containers bzw. des Förderbandes 12 erreicht werden. Die Komponenten 32, 34, 36 42, 14, 15 und 44 bilden somit einen Roboter.

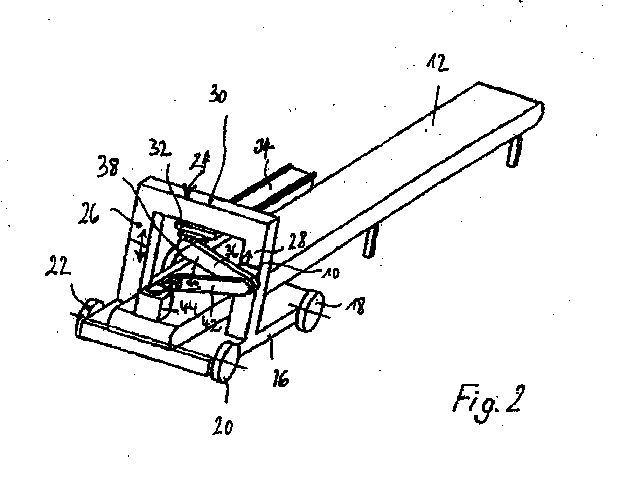

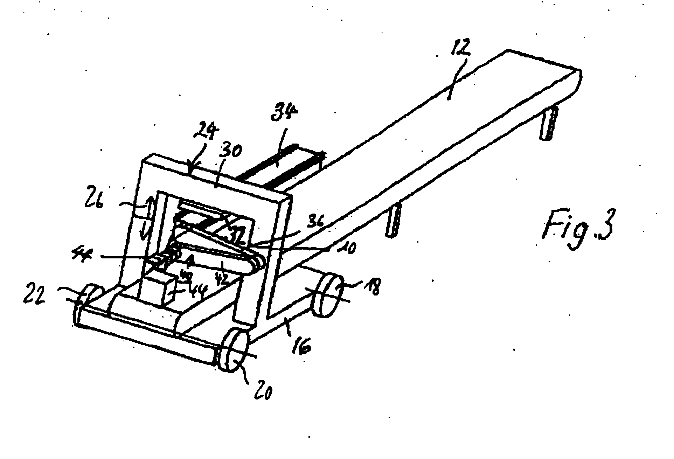

Die Figuren 1 bis 3 veranschaulichen in mehreren Schritten den Vorgang des Aufgreifens von im Container befindlichem Stückgut und das Ablegen auf dem Förderband 12. Am Übergang von der Stellung der Figur 1 zu derjenigen der Figur 2 ist der Schlitten 34 in seine zurückgezogene Stellung zurückgefahren. In dieser Stellung liegt der Greifer 44 oberhalb des Förderbandes 12. Der Greifer 44 kann das Paket jetzt freigeben und wie Figur 3 zeigt nach oben abgehoben werden. Das Paket kann jetzt durch das Förderband 12 aus dem Container heraus transportiert werden.

Anstelle der Führung 32 mit dem Schlitten 34 kann an der Brücke 24 auch ein Roboter vorgesehen sein, der einen Greifer besitzt, der dreidimensional verfahrbar ist.

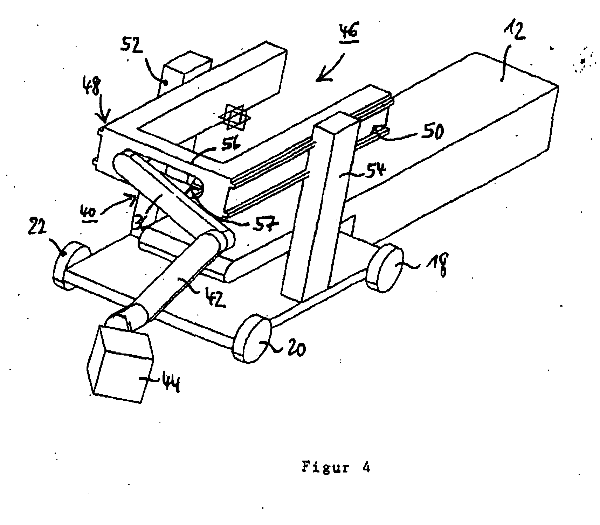

Die in Figur 4 gezeigte Ausführungsform unterscheidet sich von der in den Figuren 1 bis 3 gezeigten Ausführungsformen im wesentlichen darin, daß anstelle der Führung 32 und des in der Führung 32 geführten Schlittens 34 ein zweispuriges Führungsprofil 46 vorgesehen ist, die zwei horizontale Führungsprofile 48 und 50 umfaßt, die außen in jeweiligen seitlich angeordneten, senkrechten Schenkeln 52 und 54 geführt werden und durch einen horizontalen Querträger 56 auf der Seite des vorderen Endes des Förderbandes 12 miteinander verbunden sind, wobei das erste Gelenkarmteil 40 an dem Querträger 56 in einer vertikalen Ebene drehbar befestigt ist. Der Befestigungspunkt des Gelenkarmteils 40 ist in einem sich in dem Querträger 56 horizontal erstreckenden Langloch 57 verfahrbar. Die siebte Achse verläuft somit horizontal quer zum Förderband.

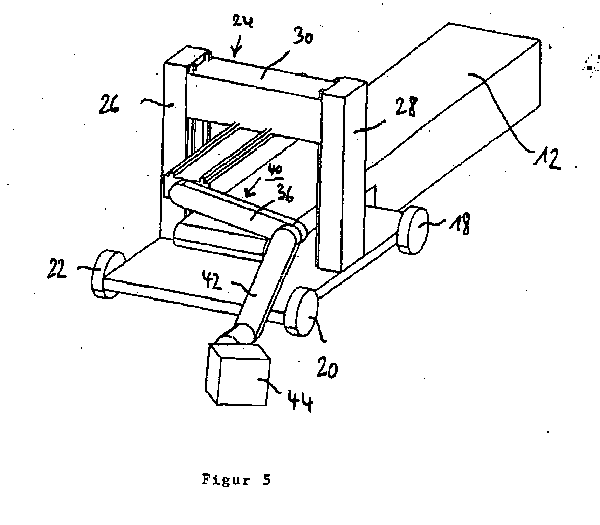

Die in Figur 5 gezeigte Ausführungsform unterscheidet sich von der in den Figuren 1 bis 3 gezeigten Ausführungsform im wesentlichen darin, daß nur der Querträger 30 in der Höhe verfahrbar gestaltet ist.

Selbstverständlich weisen die Roboter auch geeignete Antriebe und Steuerungen auf, wobei letztere auch fern davon vorgesehen sein können.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 10: Förderer
- 12: Förderband
- 14, 15: drehbare Achsen
- 16: Wagen
- 18, 20, 22: Rollen
- 24: Brücke
- 26,28: Schenkel
- 30: Querträger
- 32: Führung
- 34: Schlitten
- 36: Gelenkarm
- 38: Achse
- 40,42: Gelenkarmteile
- 44: Greifer
- 46: zweispuriges Führungsprofil
- 48, 50: Führungsprofile
- 52, 54: Schenkel
- 56: Querträger
- 57: Langloch
- 58, 60, 62: teleskopierbare Arme

## Patentansprüche

1. Vorrichtung zum Be- und/oder Entladen von Stückgütern für von wenigstens einer Seite horizontal zugängliche Transportfahrzeuge oder -behälter, mit einem in das Transportfahrzeug bzw. den Transportbehälter hinein verfahr- oder teleskopierbaren Förderer (10) und mit einem in das Transportfahrzeug oder den Transportbehälter hinein bewegbaren Roboter, wobei der Roboter in einer erhöhten Position über dem Förderer (10) angeordnet ist,
**dadurch gekennzeichnet, dass**
der Roboter eine horizontale Linearachse mit einem verfahrbaren Schlitten (34) und einen Gelenkarm (36) umfaßt, dessen eines Ende über ein Drehgelenk mit einem der beiden Enden des Schlittens (34) in dessen Verfahrrichtung verbunden ist, wobei der Gelenkarm (36) in einer Ebene, die unter einem Winkel α im Bereich von 45° bis 90° zur Horizontalen verläuft, drehbar ist und mindestens zwei Gelenkarmteile (40, 42), die in besagter Ebene in Bezug aufeinander drehbar sind, und einen Effektor umfaßt, der an dem frei beweglichen Ende des äußeren Gelenkarmteils (42) vorgesehen ist.

2. Vorrichtung nach Anspruch 1, **dadurch gekennzeichnet, daß** der Förderer (10) ein Förderband (12) umfaßt.

3. Vorrichtung nach Anspruch 2, **dadurch gekennzeichnet, daß** eine das Förderband (12) überspannende Brücke (24) vorgesehen und der Roboter an der Brücke (24) montiert ist.

4. Vorrichtung nach Anspruch 3, **dadurch gekennzeichnet, daß** die Brücke (24) in der Höhe verfahrbar ist.

5. Vorrichtung nach Anspruch 3 oder 4, **dadurch gekennzeichnet, daß** der Befestigungspunkt des Gelenkarmteils (36) horizontal quer zum Förderband (12) an der Brücke (24) verfahrbar ist.

6. Vorrichtung nach einem der Ansprüche 3 bis 5, **dadurch gekennzeichnet, daß** der Roboter an der Unterseite des Mittelteils der Brücke (24) montiert ist.

7. Vorrichtung nach einem der Ansprüche 3 bis 6, **dadurch gekennzeichnet, daß** die Brücke (24) unabhängig vom Förderband (12) oder vom vorderen Ende des Förderbandes (12) in das Transportfahrzeug bzw. in den Transportbehälter hinein verfahrbar ist.

8. Vorrichtung nach einem der Ansprüche 3 bis 6, **dadurch gekennzeichnet, daß** die Brücke (24) auf einem Wagen (16) montiert ist, der zusammen mit dem Förderband (12) oder dem vorderen Ende des Förderbandes (12) in das Transportfahrzeug oder den Transportbehälter hinein verfahrbar ist.

9. Vorrichtung nach einem der vorangehenden Ansprüche, **dadurch gekennzeichnet, daß** bei dem Roboter die Ebene unter einem Winkel α im Bereich von 45° bis 90° zur Verfahrrichtung des Schlittens (34) verläuft.

10. Vorrichtung nach einem der vorangehenden Ansprüche, **dadurch gekennzeichnet, dass** bei dem Roboter der Winkel **α** im Bereich von 60° bis 90° liegt.

11. Vorrichtung nach einem der vorangehenden Ansprüche, **dadurch gekennzeichnet, dass** bei dem Roboter der Winkel α 90° beträgt.

12. Vorrichtung nach einem der vorangehenden Ansprüche, **dadurch gekennzeichnet, daß** bei dem Roboter die Linearachse in Mehrspurbauweise gestaltet ist.

13. Vorrichtung nach einem der vorangehenden Ansprüche, **dadurch gekennzeichnet, daß** bei dem Roboter die Linearachse eine Zahnradantriebseinrichtung umfaßt.

## Claims

1. A device for loading and/or unloading packaged goods onto transport vehicles or transport containers that are horizontally accessible from at least one side, comprising a conveyor (10) that can be moved or telescoped into the transport vehicle or transport container, and comprising a robot that can be moved into the transport vehicle or into the transport container, whereby the robot is arranged in an elevated position above the conveyor (10),
**characterized in that**
the robot has a horizontal linear axis with a moving carriage (34) and an articulated arm (36) whose one end is connected via an articulated joint to one of the two ends of the carriage (34) in the direction of movement, whereby the articulated arm (36) can be rotated in a plane that extends at an angle α in the range from 45° to 90° relative to the horizontal, and also comprising at least two articulated arm members (40, 42) that can rotate with respect to each other in said plane as well as an effector that is provided on the free movable end of the outer articulated arm member (42).

2. The device according to Claim 1,
**characterized in that**
the conveyor (10) comprises a conveyor belt (12).

3. The device according to Claim 2,
**characterized in that**
a bridge (24) that straddles the conveyor belt (12) is provided and the robot is mounted on said bridge (24).

4. The device according to Claim 3,
**characterized in that**
the height of the bridge (24) is adjustable.

5. The device according to Claim 3 or 4,
**characterized in that**
the attachment point of the articulated arm member (36) can be moved horizontally, crosswise to the conveyor belt (12) on the bridge (24).

6. The device according to one of Claims 3 to 5,
**characterized in that**
the robot is mounted on the bottom of the center part of the bridge (24).

7. The device according to one of Claims 3 to 6,
**characterized in that**,
independently of the conveyor belt (12) or of the front end of the conveyor belt (12), the bridge (24) can be moved into the transport vehicle or into the transport container.

8. The device according to one of Claims 3 to 6,
**characterized in that**
the bridge (24) is mounted on a cart (16) that, together with the conveyor belt (12) or with the front end of the conveyor belt (12), can be moved into the transport vehicle or into the transport container.

9. The device according to one of the preceding claims,
**characterized in that**
as far as the robot is concerned, the plane extends at an angle α in the range from 45° to 90° relative to the direction of movement of the carriage (34).

10. The device according to one of the preceding claims,
**characterized in that**
as far as the robot is concerned, the angle α is in the range from 60° to 90°.

11. The device according to one of the preceding claims,
**characterized in that**
as far as the robot is concerned, the angle α is 90°.

12. The device according to one of the preceding claims,
**characterized in that**
as far as the robot is concerned, the linear axis has a multi-track configuration.

13. The device according to one of the preceding claims,
**characterized in that**
as far as the robot is concerned, the linear axis comprises a gear drive means.

## Revendications

1. Dispositif pour charger et décharger des envois de détail pour des véhicules ou conteneurs de transport accessibles horizontalement par au moins un côté, avec un convoyeur (10) télescopique ou pouvant être déplacé pour entrer dans le véhicule de transport ou le récipient de transport et avec un robot mobile de manière à pouvoir entrer dans le véhicule de transport ou le récipient de transport, le robot étant situé dans une position surélevée au-dessus du convoyeur (10), **caractérisé en ce que**
le robot comporte un axe linéaire horizontal avec une pièce coulissante déplaçable (34) et un bras articulé (36) dont une extrémité est reliée, par l'intermédiaire d'une articulation rotative, à l'une des deux extrémités de la pièce coulissante (34) dans le sens du déplacement de celle-ci, le bras articulé (36) étant rotatif dans un plan qui forme un angle α dans une plage de 45° à 90° avec l'horizontale et comportant au moins deux parties de bras articulé (40, 42) rotatives l'une par rapport à l'autre dans ledit plan et un actionneur prévu à l'extrémité librement mobile de la partie distale du bras articulé (42).

2. Dispositif selon la revendication 1, **caractérisé en ce que** le convoyeur (10) comprend une bande convoyeuse (12).

3. Dispositif selon la revendication 2, **caractérisé en ce qu'**un pont (24) enjambant la bande convoyeuse (12) est prévu et le robot est monté sur le pont (24).

4. Dispositif selon la revendication 3, **caractérisé en ce que** le pont (24) est déplaçable en hauteur.

5. Dispositif selon la revendication 3 ou 4, **caractérisé en ce que** le point de fixation de la partie de bras articulé (36) est déplaçable horizontalement, transversalement par rapport à la bande convoyeuse (12), au niveau du pont (24).

6. Dispositif selon l'une des revendications 3 à 5, **caractérisé en ce que** le robot est monté sur la face inférieure de la partie centrale du pont (24).

7. Dispositif selon l'une des revendications 3 à 6, **caractérisé en ce que** le pont (24) peut être déplacé pour entrer dans le véhicule de transport ou dans le récipient de transport indépendamment de la bande convoyeuse (12) ou de l'extrémité avant de la bande convoyeuse (12).

8. Dispositif selon l'une des revendications 3 à 6, **caractérisé en ce que** le pont (24) est monté sur un chariot (16) qui peut être déplacé pour entrer dans le véhicule de transport ou dans le récipient de transport conjointement avec la bande convoyeuse (12) ou l'extrémité avant de la bande convoyeuse (12).

9. Dispositif selon l'une des revendications précédentes, **caractérisé en ce que**, pour le robot, le plan forme un angle α dans une plage de 45° à 90° avec le sens du déplacement de la pièce coulissante (34).

10. Dispositif selon l'une des revendications précédentes, **caractérisé en ce que**, pour le robot, l'angle α est situé dans une plage allant de 60° à 90°.

11. Dispositif selon l'une des revendications précédentes, **caractérisé en ce que**, pour le robot, l'angle α est de 90°.

12. Dispositif selon l'une des revendications précédentes, **caractérisé en ce que**, pour le robot, l'axe linéaire est une réalisation à plusieurs pistes.

13. Dispositif selon l'une des revendications précédentes, **caractérisé en ce que**, pour le robot, l'axe linéaire comporte un dispositif d'entraînement à engrenage.
